# EUROPÄISCHE PATENTANMELDUNG

(11) **EP 1 249 961 A1**
(43) Veröffentlichungstag der Anmeldung: **16.10.2002**
(21) Anmeldenummer: 01108963.8
(22) Anmeldetag: 10.04.2001
(51) Int. Cl.: H04L 7/04, H04J 3/06

(54) **Verfahren und Kommunikationssystem-Vorrichtung zur Synchronisierung von über eine Schnittstelle übertragenen Daten**

(71) Anmelder: SIEMENS AKTIENGESELLSCHAFT, 80333 München (DE)
(72) Erfinder: Lott, Matthias, 81477 München (DE); Schulz, Egon, Dr., 80993 München (DE); Zirwas, Wolfgang, 82194 Groebenzell (DE)

(57) **Zusammenfassung**

Die Erfindung bezieht sich auf ein Verfahren zum Synchronisieren von über eine Schnittstelle (V) zwischen zumindest einer ersten und einer zweiten Station (AP bzw. W-H) übertragenen Daten (d1, d2, d3, ...di), bei dem die zu übertragenden Daten (d1, d2, d3, ...di) in definierte Datenfolgen (PT) eingesetzt werden und in die Datenfolgen (PT) an einer definierten Stelle eine Synchronisierungsinformation (P, Px) eingesetzt wird.

Zur Verbesserung der Synchronisierung wird vorgeschlagen, die Synchronisierungsinformation (P) hinsichtlich ihrer Position innerhalb der Datenfolge (PT), ihrer Länge und/oder ein zeitlicher Abstand mehrerer Synchronisierungsinformationen (P, Px) situationsabhängig festzulegen.

## Beschreibung

Die Erfindung bezieht sich auf ein Verfahren zur Synchronisierung von über eine Schnittstelle übertragenen Daten gemäß den oberbegrifflichen Merkmalen des Patentanspruchs 1 sowie auf eine Kommunikationssystem-Vorrichtung zum Durchführen eines solchen Verfahrens.

In leitungsgebundenen Kommunikationssystemen findet eine Kommunikation zwischen miteinander verdrahteten Teilnehmerstationen statt, wobei zwischen diesen in der Regel Vermittlungsstellen zwischengeschaltet sind.

In Funk-Kommunikationssystemen, beispielsweise den Mobilfunksystemen GSM (Global System for Mobile Communications) oder UMTS (Universal Mobile Telecommunication System), werden Informationen wie beispielsweise Sprache, Bildinformation oder andere Daten mit Hilfe von elektromagnetischen Wellen über eine Funkschnittstelle übertragen. Die Funkschnittstelle dient als eine Verbindung zwischen einer Basisstation und einer Vielzahl von Teilnehmerstationen, wobei die Teilnehmerstationen beispielsweise Mobilstationen oder ortsfeste Funkstationen sein können. Das Abstrahlen der elektromagnetischen Wellen erfolgt dabei mit Trägerfrequenzen, die in einem für das jeweilige System vorgesehenen Frequenzband liegen. Für die dritte Mobilfunkgeneration UMTS sind zwei Modi vorgesehen, wobei ein Modus einen FDD-Betrieb (Frequency Division Duplex) und der andere Modus einen TDD-Betrieb (Time Division Duplex) zugrunde legt. Diese Modi finden ihre Anwendung in unterschiedlichen Frequenzbändern, wobei beide Modi ein kodegeteiltes sogenanntes CDMA-Teilnehmer-Separierungsverfahren (Code Division Multiple Access) unterstützen.

Vor allem in leitungsgebundenen Kommunikationssystemen erfolgt die Steuerung von Verbindungen zwischen einer Teilnehmerstation und einem Zugangsnetz im Falle eines Datenzugangs zumeist über ein Punkt-zu-Punkt-Protokoll (PPP).

Unter den verschiedenartigsten Kommunikationssystemen gibt es Datennetze, wie z.B. HiperLAN Typ 2, die in der Regel lokal aufgebaut sind und zur allgemeinen Verbindung von Datenstationen konzipiert sind, die nachfolgend lediglich zur Unterscheidung von reinen Teilnehmerstationen für Mobilfunksysteme und ohne Beschränkungen als Host bezeichnet werden. Zwei Host-Rechner können direkt oder über Hubs und Brücken miteinander und mit Netzeinrichtungen, wie einem Zugriffsserver verbunden sein. Der Transport von Datenpaketen zwischen einem Host und einer anderen Netzeinrichtung erfolgt zumeist gemäß dem Internet-Protokoll (IP).

Ein Host ist üblicherweise drahtgebunden an ein lokales Netz angeschlossen, wobei das letzte Teilstück eines drahtbasierten Zugangs in neueren Netzen drahtlos über Funk erfolgen kann. Ein lokales Netz, das den drahtlosen Anschluß von Hosts unterstützt, wird allgemein als W-LAN (Wireless Local Area Network) bezeichnet. Der Einsatz solcher Funktechnologien erlaubt insbesondere eine Datenübertragung auf einem gemeinsam genutzten Medium (Shared Medium) wie der Luftschnittstelle.

Für die sichere Demodulation von Daten, die über die Schnittstelle, insbesondere über einen Funkkanal auf einer Luftschnittstelle übertragen werden, ist die Synchronisation zu empfangener Daten im Zeit- und Frequenzbereich erforderlich. Werden kohärente Modulationsverfahren eingesetzt, muss außerdem die Phase des Empfangssignals bestimmt werden. Dazu werden bekannte Sequenzen am Anfang der zu übertragenden Daten eingefügt. Solche Sequenzen werden als Präambel bezeichnet. Durch die Korrelation einer gesendeten und im Empfänger empfangenen Präambel mit der gleichen, am Empfänger bekannten Sequenz können der optimale Empfangszeitpunkt bzw. Abtastzeitpunkt, die Trägerfrequenz und die Phase bestimmt werden.

Wegen der zeitlichen Varianz des Funkkanals und der Drift der Oszillatoren im Sender und im Empfänger, muss am Empfänger nach einer gewissen Zeit erneut synchronisiert werden, um die zunehmenden Abweichungen von dem optimalen Abtastzeitpunkt, der Frequenz und der Phase zu korrigieren. Da die Präambel einen Overhead darstellt und daher das Verhältnis von Präambel zu Nutzdaten möglichst klein sein sollte, soll die Synchronisation einerseits möglichst selten durchgeführt werden. Andererseits können durch häufige Synchronisation der Abtastzeitpunkt, die Frequenz und die Phase genauer nachgeführt und damit die Anzahl der Synchronisationsfehler bei der Demodulation verringert werden.

Das Verhältnis zwischen effizienter Ausnutzung der Übertragungskapazität durch geringen Overhead und der optimalen Schätzung von Abtastzeitpunkt, Frequenz und Phase zur Vermeidung von Fehlern bei der Demodulation stellt ein Optimierungsproblem dar.

In der aktuellen Spezifikation des HiperLAN Typ 2 Standards wird für die Rahmensynchronisation in festen Abständen von 2 ms von dem Zugriffspunkt (AP: Access Point) bzw. der zentralen Steuereinrichtung (CC: Central Controller) eine Sequenz der Länge von 16 µs auf dem Broadcast Channel (BCH) übertragen. Zusätzlich wird vor jeder Übertragung in Abwärtsrichtung (auf dem Downlink) vom Zugriffspunkt (AP/CC) zu einem/mehreren mobilen Terminal/s (MT) eine 8 µs lange Präambel ausgesendet. In Aufwärtsrichtung (auf dem Uplink) wird entweder eine kurze Präambel der Dauer 12 µs oder eine 16 µs lange Präambel ausgesendet. (ETSI/BRAN "Broadband Radio Access Networks (BRAN); HiperLAN Type 2; Physical (PHY) layer", Draft DTR/BRAN-0023003, ETSI, Sophia Antipolis, France, März 2000.) Signalisierungsdaten und Nutzdaten werden in Uplink- und Downlink-Verbindungen für eine logische Verbindung (DLC User Connection, DUC) in sogenannten Paketzügen (Packet Trains, PT) versendet. Präambel und Nutzlast werden für die Übertragung in Rahmen (frames) eingesetzt. Dabei wird lediglich zu Beginn eines Paketzugs die Präambel zur Synchronisation für Downlink oder Uplink versendet, damit die Nicht-Nutzlast (Overhead) möglichst gering ausfällt. (ETSI/BRAN "Broadband Radio Access Networks (BRAN); HiperLAN Type 2; Data Link Control (DLC) Layer; Part 1: Basic Data Transport Functions, Draft DTR/BRAN-0020004-1, ETSI, Sophia Antipolis, France, März 2000.)

Wie lang die Paketzüge sind, d.h. wie viel eines Rahmens für eine logische Verbindung innerhalb eines Rahmens reserviert wird, hängt von dem nicht standardisierten Scheduling-Algorithmus im Zugriffspunkt bzw. der zentralen Steuereinrichtung ab. Damit wird ebenfalls festgelegt, wieviel Daten auf Basis einer Präambel am Anfang eines Paketzugs demoduliert werden müssen.

Für die Kanalschätzung wird gemäß dem HiperLAN-Typ2-Standard auf vier Unterträgern, den Pilotträgern, eine bekannte Sequenz übertragen. Diese Pilotsignale werden außerdem für die Nachführung der Phasenänderung (Phasen-Tracking) verwendet. Damit ist das Nachführen (tracking) von Frequenzabweichungen möglich. In frequenzselektiven Funkkanälen können aber gerade die Pilotsignalträger stark gedämpft sein.

Wenn das auf Basis der Pilotsignale beschriebene einfache Tracking nicht ausreicht, kann "blind" getrackt werden (blind equalization), d.h. es werden geschätzte Empfangssymbole für die Kanalschätzung verwendet. Dieses Verfahren ist in der Regel zwar leistungsfähig, jedoch erhöht sich der Rechenaufwand. In sehr schlechten Kanälen kann außerdem - ähnlich wie es auch für die Codierung allgemein gilt - die Bitfehlerrate (BER: Bit Error Rate) auf Grund von falsch geschätzten Symbolen verschlechtert werden. Dies hat dann durch Fehlerfortpflanzung eine weitere Degradation bzw. Verschlechterung zur Folge.

Insbesondere in kritischen Funksituationen sind die bekannten Verfahren jedoch nicht ausreichend.

Die Aufgabe der Erfindung besteht darin, ein verbessertes Verfahren zum Synchronisieren von über eine Schnittstelle übertragenen Daten bzw. eine Kommunikationssystem-Vorrichtung zum Durchführen eines solchen Verfahrens vorzuschlagen.

Diese Aufgabe wird durch das Verfahren zum Synchronisieren von über eine Schnittstelle übertragenen Daten mit den Merkmalen des Patentanspruchs 1 bzw. eine Kommunikationssystem-Vorrichtung zum Durchführen eines solchen Verfahrens mit den Merkmalen des Patentanspruchs 9 gelöst.

Vorteilhafte Ausgestaltungen sind Gegenstand von abhängigen Ansprüchen.

Vorteilhaft ist insbesondere die Möglichkeit der Bestimmung und Optimierung der Abstände zwischen den Präambeln auf Basis der Kanalschätzung mit Hilfe von Pilotsignalen, von Korrekturgrößen der Phasenregelkreise, von bestimmten Synchronisationsfehlern und von resultierenden Bitfehlerraten (BER). Aufgrund dieser Messwerte wird im Zugriffspunkt und/oder einer Steuereinrichtung oder an den mobilen Terminals bzw. Hosts alternativ oder zusätzlich entschieden, ob eine kurze oder lange Präambel auf dem Uplink verwendet wird. Zugriffspunkt und/oder Steuereinrichtung können nach dem gleichen Verfahren auch die Anzahl, die Lage und/oder die Abstände der Präambeln auf dem Downlink optimieren.

Das Einsetzen zusätzlicher Präambeln als Synchronisierungssignale ist für die verbesserte Frequenz- bzw. Phasensynchronisation von besonderem Vorteil, zumal die Anforderung an die Phasensynchronisation insbesondere bei höherstufiger Modulation (64-QAM) für OFDM (Orthogonal Frequency Division Multiplexing)-Signale sehr hoch ist.

Die Funkschnittstelle kann insbesondere in Kommunikationssystemen gemäß dem HiperLAN/2-Standard verwaltet werden. Natürlich ist auch eine Umsetzung in zukünftige Systeme und Standards möglich.

Vorteilhaft ist auch, dass eine Station wie ein Zugriffspunkt, der zentrale Funktionen hat und z.B. nach Definition vom H2-Standard zur Infrastruktur gehört, nicht notwendigerweise anwesend sein muss. Z.B. könnte eine zentrale Steuereinrichtung, die in einem Ad-hoc-Netz die Funktion des Zugriffspunktes übernimmt, auch die Funktion übernehmen. Außerdem könnte auch in einem dezentral organisierten Netz ohne Zugiffspunkt oder zentrale Steuereinrichtung das Verfahren eingesetzt werden, d.h. in einem Netz, welches nur aus funkgestützten Hosts besteht und bei dem das Verfahren zwischen beliebigen funkgestützten Hosts vorgeschlagen wird.

Durch das beschriebene Verfahren werden insbesondere auch Zugriffe von sich schnell bewegenden mobilen Stationen auf Funk-Datennetze, z.B. gemäß dem HiperLAN-Standard möglich, da durch ein solches Verfahren ein robustes Synchronisierungsverfahren bereitsteht. Dadurch stellt die starke zeitliche Varianz, die gemäß den bisherigen Vorgaben nicht eingeplant und zulässig ist, kein Problem mehr dar. Vorteilhaft ist dabei insbesondere die Reduzierung der Überbelastung durch sehr lange Synchronisierungssignale/Präambeln (Overhead), die nur für sehr schlechte Funkkanalsituationen benötigt werden und damit in den meisten Fällen wesentlich kürzer gewählt werden sollten.

Ein Ausführungsbeispiel wird nachfolgend anhand der Zeichnung näher erläutert. Es zeigen:
- Fig. 1: schematisch ein lokales Funkdatennetz mit einer Funkschnittstelle zwischen einer mobilen und einer stationären Kommunikationsstation und einem skizzierten Übertragungsrahmen für Synchronisierungs- und Nutzdaten und
- Fig. 2: eine andere Anordnung von Stationen in einem solchen Funkdatennetz.

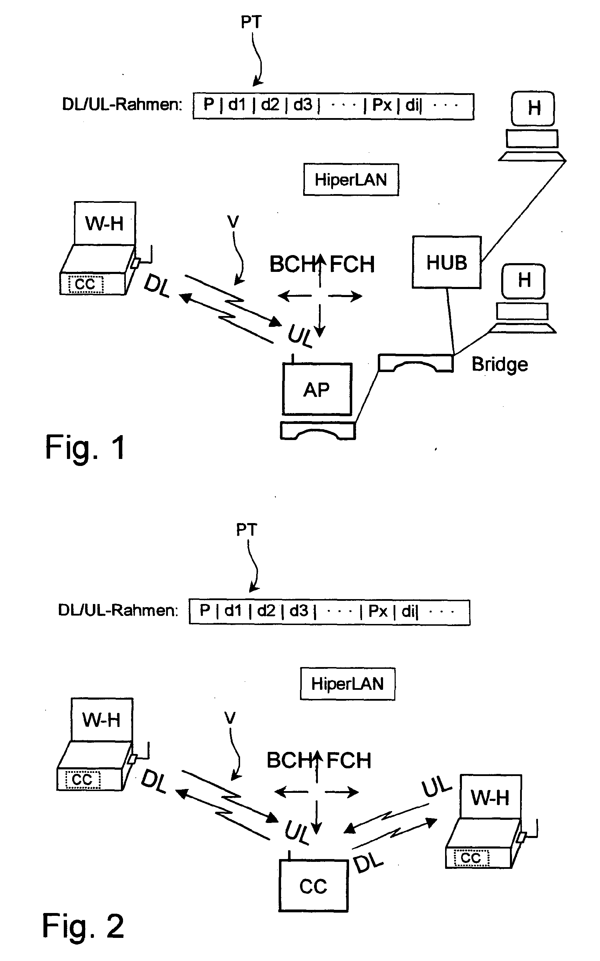

Wie aus Fig. 1 ersichtlich, weist ein Kommunikationssystem netzseitige Einrichtungen und teilnehmerseitige Einrichtungen auf. Bei dem beispielhaft dargestellten lokalen Datennetz besteht das Netz netzseitig aus einer Netzzugangseinrichtung, hier einem Zugriffspunkt AP (Access Point), der eine zentrale Steuereinrichtung aufweisen kann. Der Zugriffspunkt steht über eine Leitung mit einer Brücke (Bridge) und darüber mit weiteren Einrichtungen wie einem Hub und Rechnern bzw. Hosts H als fest angekoppelten Teilnehmereinrichtungen in Verbindung. Über eine Funkschnittstelle V steht der Zugriffspunkt AP mit einer funkgestützten Teilnehmereinrichtung in Verbindung, die nachfolgend auch als funkgestützter Host W-H bezeichnet wird. Für eine Übertragung auf andere Kommunikationssysteme sind die entsprechenden Einrichtungen an die jeweiligen Systemanforderungen anzupassen. Weiterhin können über die Funkschnittstelle über Nachrichtenkanäle BCH (Broadcast CHannel) Nachrichten und Steuerdaten an die funkgestützten Teilnehmereinrichtungen gesendet werden.

Die Kommunikationsverbindung über die Funkschnittstelle V erfolgt in Aufwärtsrichtung bzw. Uplink UL von dem funkgestützten Host W-H zum Zugriffspunkt AP bzw. umgekehrt in Abwärtsrichtung bzw. Downlink DL. Die über die Funkschnittstelle in Uplink UL bzw. Downlink DL zu übertragenden Daten d1, d2, d3,... werden senderseitig in einen Rahmen (frame) eingesetzt, wie dies im oberen Abschnitt von Fig. 1 grob skizziert ist.

In Fig. 2 ist ein vergleichbares Szenario dargestellt, wobei es sich in diesem Fall um ein Ad-hoc-Netz handelt, bei dem keine Infrastruktur vorhanden ist und die zentrale Steuereinrichtung CC die Aufgaben des Zugriffspunktes AP übernimmt. Die netzseitigen Komponenten, z.B. Hub und Bridge, sind in diesem Fall nicht vorhanden, insbesondere nicht zwingend erforderlich.

Um eine Synchronisierung bei solchen Systemen zu ermöglichen, werden eine oder mehrere Präambeln P bzw. Px in den Rahmen eingesetzt. Empfängerseitig sind diese Präambeln P und Px bekannt. Mittels einer Kreuzkorrelation kann ein Synchronisierungs-Korrekturwert der Präambeln P bzw. Px bestimmt werden, um den die entsprechenden Systemeinrichtungen anzupassen sind.

Für die Synchronisation wird vorgeschlagen, die optimalen Abstand der Präambeln auf Basis der zeitlichen Variationen des Funkkanals und der Drift der Oszillatoren, die in den Vorrichtungen zur Taktvergabe verwendet werden, zu bestimmen. Die dazu notwendigen Werte, insbesondere Messwerte und Korrekturgrößen, können aus einer Kanalschätzung durch die Pilotsignale, d.h. Datenfolgen, die an dem Sender und Empfänger a priori bekannt sind, und aus den Korrekturgrößen des Phasenregelkreises (Phase Locked Loop, PLL) sowie aus den Synchronisationsfehlern der letzten Übertragung an den mobilen Hosts bzw. Terminals W-H bestimmt werden. Daraufhin können die Werte als Signalisierungsinformation an den Zugriffspunkt AP oder die zentrale Steuereinrichtung CC übertragen werden.

Solche Messungen können natürlich ebenfalls an dem Zugriffspunkt AP durchgeführt und zur Wahl geeigneter Abstände der Präambeln P, Px ausgewertet werden.

Vorteilhafterweise können auch die resultierenden Bitfehlerwahrscheinlichkeiten (BER) bei der Demodulation empfangener Daten als Kriterium für den erforderlichen minimalen Abstand der Präambeln P, Px herangezogen werden.

Der Zugriffspunkt AP und/oder die Steuereinrichtung CC wählen nach Bestimmung der erforderlichen Werte eine geeignete Periode bzw. einen minimalen Abstand für die Präambeln P, Px aus. Je kürzer die Paketzüge PT sind, desto geringer sind die Synchronisationsfehler bei der Demodulation und desto kleiner sind die BER-Werte. Andererseits kann durch längere Paketzüge der Overhead verringert und die Übertragungskapazität effizienter ausgenutzt werden. Der Zugriffspunkt und/oder die Steuereinrichtung wählen mit mathematischen Optimierungsverfahren ein möglichst optimales Verhältnis dieser beiden Parameter aus.

Alternativ wählen der Zugriffspunkt AP und/oder die Steuereinrichtung auf Basis der Messwerte aus, ob eine kurze oder eine lange Präambel P, Px eingesetzt wird. Insbesondere ist eine Kombination möglich, bei welcher der Zugriffspunkt AP und/oder die zentrale Steuereinrichtung CC für einen gewählten Abstand der Präambeln P, Px zusätzlich abhängig von den bestimmten Werten kurzen und/oder lange Präambel auswählen.

Durch die vorgeschlagenen Synchronisationsverfahren kann ein optimales Verhältnis von einerseits Overhead im Verhältnis zu Anzahl und Länge der Präambeln P, Px und andererseits Verlässlichkeit bei der Demodulation durch Minimierung der Synchronisationsfehler erreicht werden.

Durch das vorgeschlagene Verfahren werden somit zusätzliche Präambeln abhängig vom aktuellen Zustand des Funkkanals bzw. des Phasenrauschens eingefügt.

Zudem kann bei schlechten Kanalzuständen eine längere Präambel eingefügt bzw. die Länge der Paketzüge PT kürzer gewählt werden. Dies ist z.B. dann vorteilhaft, wenn bei der Phasennachführung auf Basis von Pilotsignalen die Pilotträger auf Grund des frequenzselektiven Funkkanals stark gedämpft sind und daher eine Korrektur der Phase insbesondere bei langen Paketzügen PT nur unzureichend durchgeführt werden kann.

Weiterhin kann das beschriebene Verfahren dazu eingesetzt werden, dass bei wiederholten Übertragungen von fehlerhaft empfangenen Daten mittels eines ARQ-Protokolls (ARQ: Automatic Repeat Request) diese Daten durch eine längere Synchronisationssequenz besser vor Fehlern auf dem Funkkanal geschützt werden. Eine wiederholte Übertragung kann damit mit einer höheren Wahrscheinlichkeit korrekt empfangen werden. Dieses ist besonders für zeitkritische Dienste wichtig, da durch die wiederholte Übertragung zusätzliche Verzögerungszeiten entstehen und damit die resultierende Verzögerungszeit größer ist als für Daten, die sofort richtig am Empfänger decodiert werden können. Dabei kann z.B. die Länge der Synchronisierungsinformation P, Px in Zusammenhang mit einem Fehlersicherungsverfahren wie ARQ für eine erste Übertragung kleiner gewählt werden als für eine wiederholte Übertragung .

Hervorzuhebende Verfahrensschritte sind gemäß einer einfachen Ausführungsform das Messen der aktuellen Qualität bzw. der Anforderung an die Phasensynchronisation. Das Messen kann bei Bedarf, regelmäßig oder ständig durchgeführt werden. Als Kriterium kann beispielsweise die Varianz der Kanalschätzung oder die Bitfehlerrate verwendet werden.

Aus dem Messergebnis wird dann abgeleitet, ob bzw. wenn ja, wie viele, wie viele zusätzliche und/oder wie lange bzw. kurze Präambeln als Synchronisierungssignale benötigt werden. Dazu können auch für sich bekannte Optimierungsverfahren verwendet werden.

Sofern die Bestimmung nicht bereits im Bereich der Station erfolgt, in der die Präambeln in Rahmen bzw. Paketzüge PT einzusetzen sind, werden die erforderlichen Daten dieser Station mitgeteilt und dort verarbeitet. So setzt im folgenden Schritt z.B. der Zugriffspunkt AP entsprechend den von der mobilen Station W-H mitgeteilten Daten entsprechende Präambeln in den Datenzug PT ein. Der mobilen Station W-H werden die Positionen oder sonstige Daten über die Präambeln bei Bedarf über z.B. den Nachrichtenkanal BCH (Broadcast Control Channel) oder FCH (Frame Control Channel) oder einen anderen Kanal mitgeteilt.

Alternativ zur jeweiligen Aussendung der Daten über Nachrichtenkanäle können entsprechende Daten auch in Tabellen abgelegt werden, die in den netzseitigen und den mobilen bzw. teilnehmerseitigen Stationen W-H, H hinterlegt werden. Solche Tabellen können vorteilhafterweise auch durch ausgesendete Daten geändert oder aktualisiert werden. Für die Rückübertragung solcher Daten zu z.B. einer mobilen Station, die entsprechendes Einsetzen von Präambeln seitens der Zugriffsstation AP fordert, kann beispielsweise auch ein neuer logischer Kanal im bestehenden Nachrichtenkanal (FCH: Frame Control Channel) eingeführt werden.

## Patentansprüche

1. Verfahren zum Synchronisieren von über eine Funk-Schnittstelle (V) zwischen zumindest einer ersten und einer zweiten Station (AP bzw. W-H) übertragenen Daten (d1, d2, d3, ..., di) in einem Funk-Kommunikationssystem , bei dem
- die zu übertragenden Daten (d1, d2, d3, ...di) in definierte Datenfolgen (PT) eingesetzt werden und
- in die Datenfolgen (PT) an einer definierten Stelle eine Synchronisierungsinformation (P, Px) eingesetzt wird,
**dadurch gekennzeichnet, dass**
- die Synchronisierungsinformation (P) hinsichtlich ihrer Position innerhalb der Datenfolge (PT), ihrer Länge und/oder eines zeitlichen Abstands mehrerer Synchronisierungsinformationen (P, Px) situationsabhängig festgelegt wird.

2. Verfahren nach Anspruch 1, bei dem
die Festlegung auf Basis einer Kanalschätzung durchgeführt wird.

3. Verfahren nach Anspruch 1 oder 2, bei dem
die Festlegung mit Hilfe von bestimmten Werten von Pilotsignalen, von Korrekturgrößen der Phasenregelkreise, von bestimmten Synchronisationsfehlern und/oder von resultierenden Bitfehlerraten (BER) durchgeführt wird.

4. Verfahren nach einem vorstehenden Anspruch, bei dem
die Festlegung unter Anwendung eines Optimierungsverfahrens durchgeführt wird, bei dem ein optimales Verhältnis zwischen einerseits Overhead im Verhältnis zu Anzahl und Länge der Synchronisierungsinformation(en) (P, Px) und andererseits Verlässlichkeit bei der Demodulation empfangener Daten (PT, d1, d2,...) durch Minimierung von Synchronisationsfehlern angenähert oder bestimmt wird.

5. Verfahren nach einem vorstehenden Anspruch, bei dem
als Synchronisierungsinformation eine Präambel (P, Px) eines Kommunikationssystems, insbesondere eines lokalen Datennetzes (HiperLAN) verwendet wird.

6. Verfahren nach einem vorstehenden Anspruch, bei dem
Daten über die Synchronisierungsinformation (P, Px) über einen vom Datenkanal (UL, DL) zumindest logisch getrennten Nachrichtenkanal (BCH) oder Rahmensteuerungskanal (FCH) zur empfangenden Station (W-H) übertragen werden.

7. Verfahren nach einem vorstehenden Anspruch, bei dem
Daten über die Synchronisierungsinformation (P, Px) ohne Anwesenheit einer stationären Station (AP) oder Steuereinrichtung (CC) von einer Station (W-H) zu einer anderen empfangenden Station (W-H) übertragen werden.

8. Verfahren nach einem vorstehenden Anspruch, bei dem
die Länge der Synchronisierungsinformation (P, Px) für eine erste Übertragung kleiner gewählt wird als für eine wiederholte Übertragung in Zusammenhang mit einem Fehlersicherungsverfahren (ARQ).

9. Kommunikationssystem-Vorrichtung (W-H; AP) zum Durchführen eines Verfahrens nach einem vorstehenden Anspruch, mit einer Steuereinrichtung zum Bestimmen und/oder Festlegen einer Synchronisierungsinformation (P) hinsichtlich ihrer Position innerhalb einer über eine Schnittstelle (V) zu übertragenden Datenfolge (PT), hinsichtlich ihrer Länge in der zu übertragenden Datenfolge (PT) und/oder hinsichtlich eines zeitlichen Abstands mehrerer Synchronisierungsinformationen (P, Px) in einer oder mehreren zu übertragenden Datenfolgen (PT).

10. Kommunikationssystem-Vorrichtung (W-H; AP) nach Anspruch 9 für eine mobile Station (W-H) oder stationäre Station (AP) oder Steuereinrichtung in einem Datennetz (HiperLAN).
